(19) Europäisches Patentamt
European Patent Office
Office européen des brevets

(11) **EP 3 194 514 B1**

(12) **FASCICULE DE BREVET EUROPEEN**

(45) Date de publication et mention de la délivrance du brevet:
**21.11.2018 Bulletin 2018/47**

(21) Numéro de dépôt: **15771194.6**

(22) Date de dépôt: **09.09.2015**

(51) Int Cl.:
*C09D 133/02* (2006.01)  *C08L 33/02* (2006.01)
*C03C 25/28* (2018.01)  *D06M 11/72* (2006.01)
*C09D 5/18* (2006.01)  *D06M 15/263* (2006.01)

(86) Numéro de dépôt international:
**PCT/FR2015/052398**

(87) Numéro de publication internationale:
**WO 2016/038299 (17.03.2016 Gazette 2016/11)**

(54) **COMPOSITION IGNIFUGEANTE POUR SUBSTRAT TEXTILE**

FLAMMHEMMENDE ZUSAMMENSETZUNG FÜR EIN TEXTILES SUBSTRAT

FLAME-RETARDANT COMPOSITION FOR A TEXTILE SUBSTRATE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **09.09.2014 FR 1458430**

(43) Date de publication de la demande:
**26.07.2017 Bulletin 2017/30**

(73) Titulaire: **Saint-Gobain Adfors**
**73000 Chambéry (FR)**

(72) Inventeurs:
• **SOLARSKI, Samuel**
**59110 La Madeleine (FR)**
• **WABLE-KRAJCO, Clémence**
**93210 La Plaine Saint-denis (FR)**

(74) Mandataire: **Saint-Gobain Recherche Département Propriété Industrielle 39 Quai Lucien Lefranc 93300 Aubervilliers (FR)**

(56) Documents cités:
**EP-A2- 0 460 516      US-A- 5 749 948
US-A1- 2004 054 035      US-A1- 2004 266 294
US-A1- 2010 069 488**

**Description**

La présente invention se rapporte à un substrat textile comprenant des fils de verre et éventuellement des fils synthétiques , revêtu d'une composition ignifugeante.

La composition ignifugeante permet de former sur le substrat textile une couche de revêtement transparent et flexible qui devient intumescente lorsqu'elle est exposée à la chaleur ou au feu. Le substrat textile est ainsi rendu plus résistant au feu.

L'ignifugation de textiles à base de fibres de verre est connue et s'obtient en appliquant un revêtement comprenant une résine organique et des composés intumescents ou des additifs anti-feu, par exemple des hydroxydes ou des composés à base de phosphore, de soufre ou d'azote

Les revêtements ignifuges intumescents connus comprennent majoritairement une résine mélamine-formaldéhyde qui certes est transparente mais qui présente l'inconvénient de réduire significativement leur flexibilité. En outre, ces revêtements sont susceptibles d'émettre du formaldéhyde ce qui va à l'encontre des réglementations actuelles qui bannissent le formaldéhyde en raison des effets nocifs sur les êtres vivants.

Les revêtements ignifuges avec additifs anti-feu permettent d'obtenir la transparence et la flexibilité souhaitées mais leur efficacité au regard du feu demeure inférieure à celle des revêtements ignifuges intumescents.

US2004/0266294 décrit par example une composition ignifugeante qui comprend une résine acrylique, un composé déshydratant, un agent d'expansion, un composé carboné polyhydrique et un substrat textile qui revêtu avec cette composition.

US20040054035 divulgue une composition ignifugeante qui comprend une résine acrylique, un composé déshydratant (polyphosphate d'ammonium), un agent d'expansion (mélamine) et un composé carboné polyhydrique (pentaérythritol). La composition peut être utilisé sur un substrat textile sous la forme d'un non tissé de fibre de verre.

Le problème technique que vise à résoudre la présente invention est d'obtenir une composition ignifugeante intumescente exempte de formaldéhyde qui soit transparente et qui permette de conserver le caractère flexible du substrat textile d'origine sur lequel elle est appliquée.

Ce problème est résolu selon l'invention par la composition ignifugeante qui consiste en une résine acrylique, constituée d'un homopolymère d'acide acrylique ou d'acide méthacrylique, ou d'un copolymère d'acide acrylique et/ou d'acide méthacrylique et d'un monomère éthyléniquement insaturé; un composé déshydratant choisi parmi l'acide phosphorique, l'acide sulfurique, l'acide borique, les sels de ces acides possédant un cation volatil, et le polyphosphate d'ammonium; un agent d'expansion choisi parmi les amines et amides qui libèrent, par dégradation thermique, des gaz ininflammables et en ce que le substrat textile comprend des fibre minérales; et éventuellement un polymère uorocaron.

Dans la présente demande, les termes et expressions suivantes ont les significations ci-après :

- par « composé déshydratant », on entend un composé qui libère un acide fort ou un précurseur de ce dernier qui est apte à libérer un acide fort à une température supérieure à 100°C, de préférence qui varie de 100 à 250°C,
- par « agent d'expansion », on entend un composé qui libère des gaz ininflammables tels que du gaz carbonique ou de l'ammoniac quand il se dégrade thermiquement. L'agent d'expansion est un composé essentiel pour obtenir l'effet d'intumescence permettant de former la structure carbonée expansée qui protège le substrat textile du feu. L'agent d'expansion est différent du composé déshydratant précité, et
- le caractère « transparent » ou de « transparence », s'entend relativement aux radiations dans le visible.

La résine acrylique a pour fonction de lier les fibres ou les fils entre eux. La résine acrylique est constituée d'un homopolymère d'acide acrylique ou méthacrylique, ou d'un copolymère d'acide acrylique et/ou méthacrylique et d'un monomère éthyléniquement insaturé tel que le styrène. De préférence, la résine est constituée d'un homolymère d'acide acrylique.

Le composé déshydratant a pour fonction de déshydrater la résine acrylique et doit en outre permettre de générer sous l'effet de l'augmentation de température un acide qui réagit avec des fonctions hydroxyles de ladite résine pour donner dans un premier temps un ester thermiquement stable. L'ester ensuite sera dégradé avec production de carbone formant la couche de protection au feu, d'eau et de gaz carbonique.

Le composé déshydratant est choisi parmi les acides forts dégradables thermiquement tels que l'acide phosphorique, l'acide sulfurique et l'acide borique, et les sels de ces acides possédant un cation volatil, et avantageusement les polyphosphates d'ammonium.

L'agent d'expansion est une amine ou un amide, avantageusement l'urée, la mélamine et la guanidine. On préfère l'urée.

En règle générale, la résine acrylique comprend suffisamment d'atomes de carbone et de fonctions hydroxyles aptes à réagir avec l'agent déshydratant pour permettre la formation d'une couche intumescente de bonne qualité. Ainsi, il n'est pas nécessaire d'ajouter à la composition ignifugeante selon l'invention un composé carboné polyhydrique différent de la résine acrylique, notamment un polyol tel que le pentaérythritol, un sucre tel que le glucose, l'arabinose et le maltose, un amidon ou une cellulose.

La composition ignifugeante conforme à la présente invention se présente sous la forme d'une dispersion aqueuse.

De préférence, la composition ignifugeante consiste en (en % de matières solides) :

- 10 à 60 % de résine acrylique, avantageusement 15 à 50 %,
- 20 à 50 % de composé déshydratant, avantageusement 30 à 40 %,
- 5 à 30 % de composé d'agent d'expansion, avantageusement 10 à 20 %,
- 0 à 60 % de polymère fluorocarboné, de préférence au moins 5 %, et avantageusement 10 à 30 %.

La composition ignifugeante comprend généralement 30 à 80 % en poids d'eau, de préférence 40 à 60 %. La teneur en eau est adaptée en fonction du mode d'application utilisé pour déposer la composition ignifugeante sur le substrat textile comme cela est décrit plus loin. A titre indicatif, la teneur en eau est par exemple égale à 40 % lorsque la composition ignifugeante est déposée par enduction et égale à 60 % pour une application par pulvérisation.

Dans la composition ignifugeante, le polymère fluorocarboné contribue à l'amélioration de la résistance au vieillissement en milieu humide du substrat textile final.

Un autre objet de l'invention concerne un substrat textile revêtu de la composition ignifugeante précitée.

Le substrat textile contient des fibres minérales et/ou des fils composés d'une pluralité de filaments minéraux, et éventuellement des fibres et/ou des fils organiques. Les fibres et fils précités, minéraux ou organiques, peuvent être continu(e)s ou coupé(e)s.

La matière minérale qui constitue les fibres et les fils précités peut être du verre ou une roche, notamment un basalte.

Les fibres et les fils organiques précités peut être des fibres et des fils naturels, notamment à base de cellulose, en particulier du coton, du lin et du chanvre, ou synthétiques, notamment à base d'un polymère, en particulier un polyester tel qu'un polyméthacrylate de méthyle, ou une polyoléfine telle qu'un polypropylène.

Le substrat textile peut se présenter sous la forme d'un non-tissé, par exemple un voile ou un mat de fibres liées chimiquement ou mécaniquement, d'un tissu, d'une grille, d'un tricot ou d'une tresse.

De préférence, le substrat textile est un tissu lumineux comprenant des fibres optiques et des fils de liage, en particulier en verre. De tels tissus sont notamment décrits dans les demandes de brevet WO 2005/026424, WO 2008/035010, WO 2008/062141 et WO 2008/087339.

De manière avantageuse, le tissu lumineux comprend des fibres optiques qui peuvent être en verre mais sont préférentiellement des fibres organiques, et des fils de liages en verre.

Les fibres optiques sont avantageusement constituées d'une ou plusieurs matières polymériques.

Les fibres optiques et les fils de liage peuvent être disposés en chaîne ou en trame. Les fibres optiques sont de préférence placées en trame et les fils de verre en chaîne. De manière avantageuse, le tissu lumineux comprend des fils de verre disposés en chaîne et une combinaison de fils de verre et de fibres optiques disposés en trame.

Les tissus lumineux peuvent comprendre une armure toile, serge, satin ou Jacquard.

Selon le ou les types d'armures choisis, il est possible de favoriser la présence des fibres optiques sur l'une des faces du tissu tout en assurant une bonne tenue du tissu.

Un premier tissu lumineux avantageux comprend au moins une partie tissée selon une armure serge, avantageusement une armure satin 4, 6, 8, 10 ou 12. Le choix d'une armure satin permet que le fil de trame ou le fil de chaine soit plus visible sur une des faces du tissu lumineux. Avantageusement, le tissu lumineux comprend une armure satin à effet trame sur la face utilisée comme surface éclairante.

Un deuxième tissu lumineux avantageux comprend au moins une partie tissée selon une armure toile car ce type d'armure permet d'assurer une bonne tenue du tissu.

Comme indiqué précédemment, les fibres optiques sont préférentiellement organiques, en particulier constituées d'une ou plusieurs matières polymériques.

A titre d'exemple de telles matières polymériques, on peut citer le polyméthacrylate de méthyle, le polycarbonate, les cyclo-oléfines et les polymères fluorés.

Une gaine peut recouvrir les fibres optiques (âme) pour les protéger et obtenir des structures bi-composants appelées coeur-écorce. La gaine peut être de même nature ou de nature différente de celle du coeur. On préfère les fibres comprenant un coeur en polyméthacrylate de méthyle et une gaine à base d'un polymère fluoré tel que le polytétrafluoroéthylène.

Les fibres optiques présentent généralement un diamètre qui varie de 100 à 1000 $\mu$m, de préférence de 200 à 550 $\mu$m et avantageusement de 450 à 550 $\mu$m.

Dans le cas de fibres optiques coeur-écorce, l'épaisseur de la gaine est comprise entre 2 et 15 $\mu$m et de préférence 5 et 10 $\mu$m.

Les fibres optiques présentent une densité d'au moins 5 fils/cm et de préférence qui varie de 8 à 20.

Les fibres optiques peuvent être traitées de manière à former des altérations invasives qui permettent l'extraction de la lumière au niveau des fibres et l'illumination de manière diffuse des surfaces principales du tissu lumineux. Les altérations invasives se présentent généralement sous la forme d'encoches ou de petites fentes qui peuvent être obtenues notamment par des procédés d'abrasion tels que le sablage, l'attaque chimique ou la fusion au moyen d'un rayonnement lumineux de forte intensité tel qu'un laser.

Les altérations invasives peuvent effectuées sur la fibre optique avant qu'elle soit tissée, ou directement sur le tissu lumineux.

Les fils de verre utilisés comme fils de liage sont constitués d'une pluralité de filaments de verre revêtus d'un ensimage, ces filaments ayant un diamètre qui varie de 5 à 24 $\mu$m, de préférence 6 à 16 $\mu$m et avantageusement 8 à 13 $\mu$m. Les fils de verre présentent également une masse linéique qui varie de 2,8 à 4800 Tex, de préférence est supérieure à 34 Tex, et avantageusement qui varie de 50 à 800 Tex.

Les fils de verre disposés en chaine présentent une densité au moins égale à 5 fils/cm, de préférence au moins égale à 7 et avantageusement de 7 à 9. Les fils de verre disposés en trame présentent une densité au moins égale à 5 fils/cm et de préférence variant de 8 à 20.

Les fils de verre peuvent être des fils retordus, le nombre de tours par mètre étant au moins égal à 5 et de préférence au moins 20.

Les fils de verre représentent au moins 20 % de la masse du tissu lumineux et de préférence au moins 40 %. Plus la proportion de fils de verre dans le tissu lumineux est élevée meilleure est la résistance au feu.

Le tissu lumineux peut comprendre un revêtement structurant appliqué de préférence sur une face non utilisée comme surface éclairante. Ce revêtement structurant est avantageusement de couleur blanche et/ou réfléchissant et/ou majoritairement à base d'une matière minérale.

Le revêtement structurant comprend généralement un liant organique polymère et éventuellement des matières de remplissage constituées de charges minérales et/ou de pigments. Le liant polymère peut être synthétique, par exemple un polyuréthane, un poly(meth)acrylate, un copolymère styrène-butadiène ou styrène-acrylique, ou un polymère naturel, par exemple un amidon.

Bien que décrite plus particulièrement relativement à des tissus lumineux, on ne saurait exclure l'application de la composition ignifugeante sur d'autres substrats textiles en particulier contenant au moins 20 % en masse d'une matière organique. Par exemple, ce substrat textile peut être un complexe comprenant une structure en verre et un non-tissé de fibres de polyester, ledit non-tissé représentant 50 à 85 % en masse de polyester, ou un tissu constitué de fibres naturelles, notamment une toile à peindre à base de fibres de cellulose, avantageusement des fibres de lin.

L'application de la composition ignifugeante sur le substrat textile peut être réalisée par tout moyen connu de l'homme du métier, par exemple par enduction au moyen d'un couteau, éventuellement disposé sur un rouleau, par enduction au rideau, et par pulvérisation.

L'application de la composition ignifugeante est suivie d'une étape de séchage qui est généralement opérée à la température ambiante (20-25°C) mais qui peut aussi être effectuée à une température plus élevée. La température de séchage doit toutefois être adaptée à la nature des fibres et des fils du substrat textile, notamment elle ne doit pas être trop proche de la température de dégradation des constituants de la composition ignifugeante et des fibres et des fils.

A titre indicatif, le séchage de tissus lumineux contenant des fibres de polymère peut être effectué à une température qui varie de 50 à 70°C, pendant une durée qui peut aller jusqu'à 60 minutes. Un séchage dans ces conditions améliore l'aspect de surface de la couche de composition ignifugeante.

La quantité de composition ignifugeante appliquée sur le substrat textile peut varier dans une large mesure en fonction du niveau de résistance au feu souhaité. En général, la quantité de composition ignifugeante (en % de matières solides) varie de 50 à 400 g par mètre carré de substrat textile, de préférence 100 à 300 g par mètre carré.

Lorsque le substrat textile est un tissu lumineux, la composition ignifugeante est de préférence appliquée sur la face utilisée comme surface éclairante principale.

Les exemples donnés ci-après permettent d'illustrer l'invention sans toutefois la limiter.

Dans ces exemples, on évalue les propriétés du substrat textile dans les conditions suivantes :

→ La résistance au feu est mesurée dans les conditions de la norme NF EN ISO 11925-2. On détermine le temps de propagation sur une distance de 15 cm et la distance de propagation pour une flamme appliquée en surface ou sur la tranche de l'échantillon.

→ La luminance (en Cd/m$^2$) est mesurée dans les conditions de la norme ISO 23539:2005. Les fibres optiques de l'échantillon à tester sont rassemblées en plusieurs groupes et connectées à une source lumineuse.

→ La raideur en flexion est mesurée sur un échantillon rectangulaire (3,8 cm x 8,0 cm) découpé dans le sens machine (par rapport au sens de tissage) au moyen d'un appareil Lorentzen & Wettre, à 23°C et 50 % d'humidité relative.

L'échantillon est maintenu verticalement à une extrémité dans la plus petite dimension entre deux mors et une force horizontale est appliquée sur l'extrémité libre. On mesure la force appliquée pour un angle de flexion égal à 5° et on calcule la raideur S (en mN.m) selon la formule suivante :

$$S = 60 \times F \times L^2 / \pi \times \theta \times b$$

dans laquelle :

F est la force mesurée pour atteindre un angle de 5° (en mN)
L est la longueur utile de l'échantillon (0,05 m)
$\theta$ est l'angle de flexion (5°)
b est la largeur de l'échantillon (0,038 m)

## EXEMPLE 1

### a) Substrat textile

Le substrat textile utilisé est un tissu à armure satin 8 constitué :

- de fils de liage en verre E

  • en chaîne : diamètre des filaments 9 $\mu$m , masse linéique 68 Tex, 20 tours/m sens Z (EC9 68 Z20), densité 7,9 fils/cm,
  • en trame : diamètre des filaments 11 $\mu$m , masse linéique 136 Tex, 28 tours/m sens Z (EC11 136 Z28), densité 12 fils/cm, et

- de fibres optiques composées d'une âme en polyméthacrylate de méthyle revêtue de polytétrafluoroéthylène : diamètre 500 $\mu$m , masse linéique 240 Tex, densité 12 fils/cm.

Le tissu a une masse surfacique égale à 524 g/m$^2$ et contient 43 % en masse de matières minérales.
On applique par enduction au couteau sur une des faces du tissu lumineux (face arrière) un revêtement structurant blanc contenant (en % massique) : 20 % d'une résine styrène-acrylique, 78 % de carbonate de calcium et 2 % d'oxyde de titane. La quantité de revêtement structurant est égale à 181 g/m$^2$ de tissu lumineux.

### b) Composition ignifugeante

On prépare une composition ignifugeante par ajout des constituants suivants (en % de matières solides) dans un récipient contenant de l'eau :

| | |
|---|---|
| - Résine acrylique (Aquaset® TF 150 ; Dow Chemicals) | 49,0 |
| - Polyphosphate d'ammonium (FR Cros®484 ; Buddenheim) | 36,0 |
| - Urée | 15,0 |

La teneur en matières solides dans la composition ignifugeante est égale à 60 %.
On obtient une solution visqueuse de couleur blanche.

### c) Substrat textile ignifugé

La composition est appliquée sur la face avant du tissu lumineux décrit sous a) par enduction au couteau monté sur un rouleau, puis séchée pendant 24 heures à la température ambiante (20-25°C), en quantités variables.
Le tissu de l'exemple 1e a subi un traitement par sablage préalablement à l'application de la composition ignifugeante.
Les mesures de résistance au feu des exemples 1a à 1e selon l'invention sont effectuées comparativement à un tissu lumineux ne contenant pas de revêtement structurant et de composition ignifugeante (exemple comparatif 1), un tissu lumineux ne contenant pas de composition ignifugeante (exemple comparatif 2) et un tissu lumineux sans revêtement structurant dans lequel la composition ignifugeante contient une résine mélamine-formaldéhyde (FX100 ; Flameseal) (exemple comparatif 3).

Les résultats sont donnés dans le tableau 1.

La distance de propagation avec application de la flamme en surface et sur la tranche du tissu lumineux est plus faible (et donc la résistance au feu est meilleure) pour l'exemple 1d selon l'invention par rapport à l'exemple comparatif 3.

Les tissus lumineux des exemples 1a à 1e peuvent subir une flexion manuelle jusqu'à un angle de flexion de 30° sans endommagement visible de la couche de composition ignifugeante. Au contraire, le tissu lumineux de l'exemple comparatif 3 se fissure et se désagrège en libérant un résidu pulvérulent.

Sur le tissu lumineux de l'exemple 1e (tissu ignifugé), on mesure la luminance et on la compare à la luminance de ce même tissu après sablage et avant l'application de la composition ignifugeante (tissu non ignifugé). Les résultats sont les suivants :

|  | Luminance (Cd/m$^2$) |
| --- | --- |
| Tissu ignifugé | 97,5 |
| Tissu non ignifugé | 90,0 |

La transmission de la lumière au travers de la couche de composition ignifugeante est légèrement augmentée ce qui démontre le caractère transparent de ladite couche.

## EXEMPLES 2 ET 3

On procède dans les conditions de l'exemple 1 modifié en ce que la composition ignifugeante contient (en % de matières solides) :

|  | Ex. 2 | Ex. 3 |
| --- | --- | --- |
| - Résine acrylique (Aquaset® TF 150 ; Dow Chemicals) | 44,0 | 39,0 |
| - Polyphosphate d'ammonium (FR Cros®484 ; Buddenheim) | 36,0 | 36,0 |
| - Urée | 15,0 | 15,0 |
| - Polymère fluorocarboné (Kappahob NI6 ; Kapp Chemie) | 5,0 | 10,0 |

Les résultats sont donnés dans le tableau 1.

Le tissu lumineux de l'exemple 3 subit un test de vieillissement accéléré dans une enceinte climatique (température : 50°C, humidité relative : 80 %) pendant 5 jours.

L'aspect de la couche de composition ignifugeante est comparable à celui du tissu lumineux avant traitement de vieillissement accéléré. Cet aspect est légèrement meilleur que celui d'un tissu lumineux revêtu d'une composition ignifugeante selon les exemples 1a et 1b.

La présence du polymère fluorocarboné dans tissu lumineux de l'exemple 3 permet d'avoir un bon compromis entre la résistance au feu et la résistance au vieillissement en milieu humide.

## EXEMPLES 4 ET 5

Ces exemples illustrent l'application de la composition ignifugeante sur des substrats textiles renfermant des fibres ou des fils de matière organique. On utilise la composition ignifugeante de l'exemple 1 pour revêtir le substrat textile suivant :

- un complexe comprenant un voile de fibres de verre renforcé dans le sens chaîne par des fils de verre et un voile de fils de polyester (grammage du complexe : 235 g/m$^2$) à raison de 150 g/m$^2$ (exemple 4),
- un tissu de fils de lin (grammage 250 g/m$^2$) à raison de 144 g/m$^2$ (exemple 5).

On mesure la résistance au feu et la raideur à la flexion, comparativement au même substrat textile non revêtu de la composition ignifugeante (exemples comparatifs 4 et 5).

Les résultats sont donnés dans le tableau 2.

La composition ignifugeant procure aux exemples 4 et 5 une résistance au feu améliorée par rapport aux exemples comparatifs 4 et 5 respectifs.

La raideur en flexion des exemples 4 et 5 est comparable à celle du substrat textile sans composition ignifugeante.

La composition ignifugeante revêtant les substrats textiles est transparente à l'oeil nu.

Tableau 1

| | Compos. ignifugeante (g matières solides/m$^2$) | Temps propagation à 15 cm (s) | | Distance propagation (mm) | |
|---|---|---|---|---|---|
| | | Surface | Tranche | Surface | Tranche |
| Ex.1a | 112 | 48 | 40 | Totale | Totale |
| Ex.1b | 155 | 71 | 49 | Totale | Totale |
| Ex.1c | 160 | n.d. | 87 | 70 | Totale |
| Ex. 1d | 274 | n.d. | n.d. | 70 | 60 |
| Ex. 1e | 285 | n.d. | n.d. | 57 | 80 |
| Ex. comp. 1 | 0 | 20 | 12 | Totale | Totale |
| Ex. comp. 2 | 0 | 29 | 22 | Totale | Totale |
| Ex. comp. 3 | 272 | n.d. | n.d. | 80 | 75 |
| Ex. 2 | 132 | n.d. | 126 | 65 | Totale |
| Ex. 3 | 135 | n.d. | 160 | 65 | Totale |
| n.d. : non déterminé | | | | | |

Tableau 2

| | Compos. ignifugeante (g matières solides/m$^2$) | Temps propagation à 15 cm (s) | | Distance propagation (mm) | | Raideur à la flexion (mN. m) |
|---|---|---|---|---|---|---|
| | | Surface | Tranche | Surface | Tranche | |
| Ex. 4 | 144 | n.d. | n.d. | 30 | 33 | 9,1 |
| Ex. comp. 4 | 0 | 19 | 12 | Totale | Totale | 8,2 |
| Ex. 5 | 150 | n.d. | n.d. | 55 | 65 | 1,8 |
| Ex. comp. 5 | 0 | 19 | 10 | Totale | Totale | 2,0 |

**Revendications**

1. Substrat textile contenant des fibres minérales et/ou des fils composés d'une pluralité de filaments minéraux, revêtu d'une composition ignifugeante, **caractérisée en ce que** la composition ignifugeante consiste en

- une résine acrylique,
- un composé déshydratant choisi parmi l'acide phosphorique, l'acide sulfurique, l'acide borique, les sels de ces acides possédant un cation volatil, et le polyphosphate d'ammonium,
- un agent d'expansion choisi parmi les amines et amides qui libèrent, par dégradation thermique, des gaz ininflammables, et
- éventuellement un composé polymère fluorocarboné,

la résine acrylique étant constituée d'un homopolymère d'acide acrylique ou d'acide méthacrylique, ou d'un copolymère d'acide acrylique et/ou d'acide méthacrylique et d'un monomère éthyléniquement insaturé.

2. Substrat textile selon la revendication 1, **caractérisé en ce que** la résine acrylique est constituée d'un homolymère d'acide acrylique.

3. Substrat textile selon l'une des revendications 1 à 2, **caractérisé en ce que** l'agent d'expansion est l'urée, la mélamine ou la guanidine, et avantageusement l'urée.

4. Substrat textile selon l'une des revendications 1 à 3, **caractérisé en ce que** la composition ignifugeante est constituée de (en % de matières solides) :

   - 10 à 60 % de résine acrylique, avantageusement 15 à 50 %,
   - 20 à 50 % de composé déshydratant, avantageusement 30 à 40 %,
   - 5 à 30 % de composé d'agent d'expansion, avantageusement 10 à 20 %,
   - de 5 à 60 % de polymère fluorocarboné, avantageusement 10 à 30 %.

5. Substrat textile selon la revendication 1, **caractérisé en ce que** les fibres et/ou les fils minéraux sont constitués de verre ou de roche, de préférence le basalte.

6. Substrat textile selon la revendication 5, **caractérisé en ce qu'**il contient en outre des fibres et/ou fils organiques naturels, de préférence à base de cellulose, ou synthétiques, de préférence à base d'un polymère.

7. Substrat textile selon l'une des revendications 1 à 6, **caractérisé en ce qu'**il se présente sous la forme d'un non-tissé, d'un tissu, d'une grille, d'un tricot ou d'une tresse.

8. Substrat textile selon l'une des revendications 1 à 7, **caractérisé en ce qu'**il s'agit d'un tissu lumineux comprenant des fibres optiques et des fils de liage, de préférence en verre.

9. Substrat textile selon la revendication 8, **caractérisé en ce que** les fibres optiques sont des fibres de verre ou organiques, de préférence organiques.

10. Substrat textile selon l'une des revendications 8 ou 9, **caractérisé en ce que** les fils de verre représentent au moins 20 % de la masse du tissu lumineux, de préférence au moins 40 %.

11. Substrat textile selon l'une des revendications 8 à 10, **caractérisé en ce qu'**il comprend en outre un revêtement structurant appliqué de préférence sur une face non utilisée comme surface éclairante.

**Patentansprüche**

1. Textiles Substrat, enthaltend Mineralfasern und/oder Fäden aus einer Mehrzahl von Mineralfilamenten, beschichtet mit einer flammhemmenden Zusammensetzung, **dadurch gekennzeichnet, dass** die flammhemmende Zusammensetzung aus Folgendem besteht aus:

   - einem Acrylharz,
   - einer Trockenmittelverbindung, ausgewählt aus Phosphorsäure, Schwefelsäure, Borsäure, flüchtiges Kation aufweisende Salze dieser Säuren, und Ammoniumpolyphosphat,
   - einem Treibmittel, ausgewählt aus Aminen und Amiden, die durch thermischen Abbau nicht brennbare Gase freisetzen, und
   - gegebenenfalls einer Fluorkohlenstoffpolymerverbindung,

   wobei das Acrylharz aus einem Homopolymer von Acrylsäure oder Methacrylsäure oder einem Copolymer von Acryisäure und/oder Methacrylsäure und einem ethylenisch ungesättigten Monomer besteht.

2. Textiles Substrat nach Anspruch 1, **dadurch gekennzeichnet, dass** das Acrylharz aus einem Homopolymer der Acrylsäure besteht.

3. Textiles Substrat nach einem der Ansprüche 1 bis 2, **dadurch gekennzeichnet, dass** das Treibmittel Harnstoff, Melamin oder Guanidin und vorteilhafterweise Harnstoff ist.

4. Textiles Substrat nach einem der Ansprüche 1 bis 3, **dadurch gekennzeichnet, dass** die flammenhemmende Zusammensetzung aus Folgendem (in % Feststoffen) besteht:

   - 10 bis 60 %,vorteilhafterweise 15 bis 50 %, Acrylharz,
   - 20 bis 50 %, vorteilhafterweise 30 bis 40 %,Trockenmittelverbindung,
   - 5 bis 30 %, vorteilhafterweise 10 bis 20 %,Treibmittelverbindung,
   - von 5 bis 60 %, vorteilhafterweise 10 bis 30 %, Fluorkohlenstoffpolymer,.

5. Textiles Substrat nach Anspruch 1, **dadurch gekennzeichnet, dass** die Fasern und/oder Mineralfäden aus Glas oder Gestein, vorzugsweise Basalt, bestehen.

6. Textiles Substrat nach Anspruch 5, **dadurch gekennzeichnet, dass** es außerdem natürliche organische, vorzugsweise auf Zellulosebasis, oder synthetische Fasern und/oder Fäden, vorzugsweise auf Basis eines Polymers, enthält.

7. Textiles Substrat nach einem der Ansprüche 1 bis 6, **dadurch gekennzeichnet, dass** es in Form eines Vlieses, eines Gewebes, eines Gitters, eines Gestricks oder eines Geflechts vorliegt.

8. Textiles Substrat nach einem der Ansprüche 1 bis 7, **dadurch gekennzeichnet, dass** es ein leuchtendes Gewebe ist, das optische Fasern und Bindefäden, vorzugsweise aus Glas, umfasst.

9. Textiles Substrat nach Anspruch 8, **dadurch gekennzeichnet, dass** die optischen Fasern Glasfasern oder organische Fasern, vorzugsweise organische Fasern sind.

10. Textilsubstrat nach einem der Ansprüche 8 oder 9, **dadurch gekennzeichnet, dass** die Glasfäden mindestens 20 % der Masse des leuchtenden Gewebes, vorzugsweise mindestens 40 %, ausmachen.

11. Textiles Substrat nach einem der Ansprüche 8 bis 10, **dadurch gekennzeichnet, dass** es ferner eine strukturierende Beschichtung umfasst, die vorzugsweise auf eine nicht als leuchtende Oberfläche verwendete Oberfläche aufgebracht wird.

**Claims**

1. A textile substrate containing mineral fibers and/or yarns composed of a plurality of mineral filaments, coated with a flame-retardant composition, **characterized by** the fact that the flame-retardant composition consists of

   - an acrylic resin,
   - a dehydrating compound selected from phosphoric acid, sulfuric acid, boric acid, the salts of these acids having a volatile cation, and ammonium polyphosphate,
   - a blowing agent selected from amines or amides which release, by thermal degradation, non-flammable gases, and
   - optionally, a fluorocarbon-based polymer compound the acrylic resin consisting of an acrylic acid homopolymer or methacrylic acid homopolymer, or of a copolymer of acrylic acid and/or methacrylic acid and of an ethylenically unsaturated monomer.

2. The textile substrate as claimed in claim 1, **characterized in that** the acrylic resin consists of an acrylic acid homopolymer.

3. The textile substrate as claimed in claim 1 or 2, **characterized in that** the blowing agent is urea, melamine or guanidine, and advantageously urea.

4. The textile substrate as claimed in one of claims 1 to 3, **characterized in that** the flame-retardant composition consists of (as % of solids):

   - 10% to 60%, advantageously 15% to 50%, of acrylic resin,

- 20% to 50%, advantageously 30% to 40%, of dehydrating compound,
- 5% to 30 %, advantageously 10% to 20%, of blowing agent,
- 5% to 60%, advantageously 10% to 30%, of fluorocarbon-based polymer.

5. The textile substrate as claimed in claim 1, **characterized in that** the mineral fibers and/or yarns consist of glass or of rock, preferably of basalt.

6. The textile substrate as claimed in claim 5, **characterized in that** it further comprises organic fibers and/or yarns which are natural, preferably based on cellulose, or synthetic, preferably based on a polymer.

7. The textile substrate as claimed in one of claims 1 to 6, **characterized in that** it is in the form of a nonwoven, of a fabric, of a mesh, of a knit or of a braid.

8. The textile substrate as claimed in one of claims 1 to 7, **characterized in that** it is a luminous fabric comprising optical fibers and binding yarns, preferably made of glass.

9. The textile substrate as claimed in claim 8, **characterized in that** the optical fibers are glass fibers or organic fibers, preferably organic fibers.

10. The textile substrate as claimed in claim 8 or 9, **characterized in that** the glass yarns represent at least 20%, preferably at least 40%, of the weight of the luminous fabric.

11. The textile substrate as claimed in one of claims 8 to 10, **characterized in that** it further comprises a structuring coating preferably applied to a face not used as lighting surface.

## RÉFÉRENCES CITÉES DANS LA DESCRIPTION

**Documents brevets cités dans la description**

- US 20040266294 A
- US 20040054035 A
- WO 2005026424 A
- WO 2008035010 A
- WO 2008062141 A
- WO 2008087339 A